**Europäisches Patentamt**

**European Patent Office**

**Office européen des brevets**

(19)

(11) Veröffentlichungsnummer: **0 004 357**
**B1**

(12) **EUROPÄISCHE PATENTSCHRIFT**

(45) Veröffentlichungstag der Patentschrift: **29.04.81**

(21) Anmeldenummer: **79100811.3**

(22) Anmeldetag: **16.03.79**

(51) Int. Cl.³: **A 01 N 43/32,**
**A 01 N 31/00,**
**A 01 N 35/06,**
**A 01 N 37/34,**
**A 01 N 37/18,**
**A 01 N 47/14,**
**A 01 N 47/26,**
**A 01 N 57/12**

(54) Fungizide Mittel.

(30) Priorität: **25.03.78 DE 2813046**

(43) Veröffentlichungstag der Anmeldung:
**03.10.79 Patentblatt 79/20**

(45) Bekanntmachung des Hinweises auf die Patenterteilung:
**29.04.81 Patentblatt 81/17**

(84) Benannte Vertragsstaaten:
**BE CH DE FR GB IT LU NL**

(56) Entgegenhaltungen:
**CH - A - 443 349**

(73) Patentinhaber: **CELAMERCK GmbH & Co. KG**
**Binger Strasse 173**
**D-6507 Ingelheim am Rhein (DE)**

(72) Erfinder: **Rohrbach, Kurt-Ulrich, Dr.**
**Am Langenberg 16**
**D-6507 Ingelheim/Rhein (DE)**
Erfinder: **Adlung, Karl Günther, Dr.**
**Finther Weg 7**
**D-6501 Budenheim (DE)**

Courier Press, Leamington Spa, England.

**0 004 357**

## Fungizide Mittel

Die Erfindung betrifft neue fungizide Mittel, die dadurch gekennzeichnet sind, daß sie als Wirkstoffe

a) 2,3-Dicyano-1,4-dithiaanthrachinon und

b) ein Fungizid aus der Reihe Dithiocarbamidate, Tetramethylthiuramdisulfid, Aluminiummonoäthylphosphit und Tetrachlorisophthalodinitril enthalten.

Es ist bekannt, daß Dithianon (2,3-Dicyano-1,4-dithiaanthrachinon) zur Bekämpfung zahlreicher pflanzenschädigender Pilze verwendet werden kann, Weniger geeignet ist der Wirkstoff jedoch zur Bekämpfung Falscher Mehltaupilze, zu denen beispielsweise die Gattungen Albugo, Bremia, Mucor, Phytophthora, Pythium, Rhizopus, Sclerospora gehören.

Überraschenderweise wurde nun gefunden, daß die Wirkung des Dithianons gegen Falsche Mehltaupilze durch verschiedene fungizide Wirkstoffe, insbesondere durch Fungizide aus der Reihe der Dithiocarbamidate, nämlich Mangan-äthylen-1,2-bis-dithiocarbamidat (Maneb), sein Koordinationsprodukt mit Zinkionen (Mancozeb), Zinkäthylen-1,2-bis-dithiocarbamidat (Zineb), seinen Komplex mit Polyäthylenthiuramdisulfid (Metriam), Zink-propylen-1,2-bis-dithiocarbamidat (Propineb) oder TMTD (Tetramethylthiuramdisulfid), Aluminiummonoäthylphosphit und Chlorothalonil (Tetrachlorisophthalodinitril) synergistisch gesteigert werden kann, ebenso die Wirkung gegen Pilze, die Blattfleckenkrankheiten verursachen.

In den erfindungsgemäßen Kombinationen wird Dithianon in einer Aufwandmenge (kg Wirkstoff pro ha) bzw. Dosierung (g Wirkstoff in 100 l Spritzbrühe) benutzt, die zwischen 0,1 und 0,7 A, vorzugsweise 0,2 und 0,6 A liegt, wobei A die übliche Aufwandmenge bzw. Dosierung bezeichnet, die bei der Anwendung eines Wirkstoffs für sich normalerweise benutzt wird. Die Aufwandmenge bzw. Dosierung der anderen Kombinationspartner in der Kombination liegt zwischen 0,2 und 0,6 A. Dabei werden die Kombinationspartner in solchen Bruchteilen der üblichen Aufwandmenge bzw. Dosierung verwendet, daß die Summe dieser Bruchteile gleich oder kleiner als 0,9 A ist. Benutzt man also Dithianon in einem relativ hohen Bruchteil von A (z.B. 0,7 A), so ist der andere Wirkstoff mit 0,2 A anzuwenden. Wird dagegen innerhalb des erfindungsgemäßen Bereichs Dithianon niedrig dosiert (z.B. 0,1 A), so kann vom anderen Wirkstoff bis zu 0,8 A angewendet werden. Selbstverständlich sind auch alle Verhältnisse zwischen diesen Extremfällen möglich.

Die erfindungsgemäßen Kombinationen können in gemeinsame Formulierungen gebracht werden, z.B. Suspensions-konzentrate oder Suspensionspulver. Da die Kombinationspartner jedoch Handelsprodukte sind, können die Kombinationen auch günstig als Tankmischungen hergestellt werden.

Durch den Einsatz der erfindungsgemäßen Wirkstoffkombinationen können nicht nur Falsche Mehltaupilze, sondern auch andere Pflanzenkrankheiten bekämpft werden, die im Wirkungsbereich der Kombinationspartner liegen. Die neuen Mittel können in allen wichtigen Feld-, Gemüse- und Dauerkulturen eingesetzt werden. Zu nennen sind hier beispielsweise Kartoffeln, Wein, Tomaten, Paprika, Tabak, Tee, Zitrusfrüchte, Hopfen, Pfeffer, Kakao, Erdbeeren, Ananas, Kohlarten einschließlich Raps, Hülsenfrüchte einschließlich Erbsen und Soja, Zuckerrüben, Zwiebelgewächse einschließlich Zwiebeln und Porree, Gurkengewächse wie Gurken und Melonen, Getreidearten einschließlich Hirse, Mais und Zuckerrohr, ferner Kern- und Steinobst.

Die günstige Wirkung der erfindungsgemäßen Mittel zeigen die folgenden Tabellen:

1. Wirkung gegen Plasmopara viticola an Wein; Anzahl befallener Blätter und Trauben je Stock

| Dithianon g / 100 l | 0 | 46,6 * | 18,6 |
|---|---|---|---|
| Kombinationspartner g / 100 l | Zineb 160 * | 0 | Zineb 80 |
| Anzahl der befallenen Blätter | 9 | 9 | 10 |
| Anzahl der befallenen Trauben | 5 | 4 | 3 |

\* Normaldosierung.

Das Ergebnis zeigt, daß mit 50% der üblichen Zineb-Menge in Kombination mit 40% der üblichen Dithianon-Menge eine gleich gute Wirkung erzielt wird wie mit 100% der Komponenten für sich.

# 0 004 357

2. Wirkung gegen Phytophthora infestans an Kartoffeln; Befallstärke in Bonitierungsnoten 1—9 (1 = befallsfrei, 9 = Totalbefall). Bonitierung 1 nach ca. 60 Tagen, Bonitierung 2 nach ca. 75 Tagen

| Dithianon g /ha | 0 | | 0 | | 188 | | 350 | |
|---|---|---|---|---|---|---|---|---|
| Kombinationspartner g /ha | 0 | | Mancozeb 1440 | | Mancozeb 800 | | Zineb 750 | |
| Bonitur | 1 | 2 | 1 | 2 | 1 | 2 | 1 | 2 |
| Befallsstärke Blatt | 7,7 | 8,7 | 4,7 | 7,4 | 4,8 | 7,2 | 4,7 | 7,1 |
| Knollenertrag in % der Kontrolle | 100 | | 111 | | 113 | | 109 | |

(Mit 1000 g Dithianon allein wird keine ausreichende Wirkung erzielt).

## Patentansprüche

1. Fungizide Mittel, dadurch gekennzeichnet, daß sie als Wirkstoffe
   a) 2,3-Dicyano-1,4-dithiaanthrachinon und
   b) ein Fungizid aus der Reihe der Dithiocarbamidate, Tetramethylthiuram-disulfid, Aluminiummonoäthyl-phosphit und Tetrachlorisophthalodinitril enthalten.
2. Fungizide Mittel nach Anspruch 1, dadurch gekennzeichnet, daß sie als Dithiocarbamidat Mangan-äthylen-1,2-bis-dithiocarbamidat (Maneb), sein Koordinationsprodukt mit Zinkionen (Mancozeb), Zink-äthylen-1,2-bis-dithio-carbamidat (Zineb), seinen Komplex mit Polyäthylenthiuramdisulfid (Metiram) oder Zinkpropylen-1,2-bis-dithiocarbamidat (Propineb) enthalten.
3. Verwendung von Mitteln nach Anspruch 1 oder 2 zur Bekämpfung Falscher Mehltaupilze und solcher Pilze, die Blattfleckenkrankheiten verursachen.

## Claims

1. Fungicidal agents, characterised in that they contain as active ingredients
   a) 2,3-dicyano-1,4-dithiaanthraquinone and
   b) a fungicide from the dithiocarbamidate series, tetramethylthiuram disulphide, aluminium monoethylphosphite and tetrachloroisophthalodinitrile.
2. Fungicidal agents, according to claim 1 characterised in that they contain as dithiocarbamidate manganese-ethylene-1,2-bis-dithiocarbamidate (Maneb), its coordination product with zinc ions (Mancozeb), zinc-ethylene-1,2-bis-dithiocarbamidate (Zineb), its complex with polyethylenethiuram disulphide (Metiram) or zinc-propylene-1,2-bis-dithiocarbamidate (Propineb).
3. Use of the agents according to claim 1 or 2 for the treatment of false mildew fungi and fungi such as give rise to leaf spot diseases.

## Revendications

1. Agents fongicides caractérisés en ce qu'ils contiennent, en tant que substances actives
   a) de la 2,3-dicyano-1,4-dithiaanthraquinone et
   b) un fongicide de la série des dithiocarbamidates, du bisulfure de tétraméthylthiourame, du monoéthylphosphite d'aluminium et du tétrachloroisophtalodinitrile.
2. Agents fongicides selon la revendication 1, caractérisés en ce qu'ils contiennent, en tant que dithiocarbamidate de l'éthylène -1,2-bis-dithiocarbamidate de manganèse (manèbe), son produit de coordination avec l'ion zinc (mancozèbe), de l'éthylène -1,2-bis-dithiocarbamidate de zinc (zinèbe), son complexe avec le bisulfure de polyéthylènethiourame (métiram) ou du propylène -1,2-bis-dithiocarbamidate de zinc (propinèbe).
3. Utilisation des agents selon la revendication 1 ou 2 pour lutter contre les champignons du faux mildiou et les champignons du type de ceux qui provoquent des maladies tâchant les feuilles.

3